# EUROPEAN PATENT SPECIFICATION

(11) **EP 1 325 257 B1**
(45) Date of publication and mention of the grant of the patent: **27.04.2005**
(21) Application number: 01972888.0
(22) Date of filing: 05.10.2001
(51) Int. Cl.: F16L 21/035

(54) **SEALING RING**
DICHTUNGSRING
SEGMENT D'ETANCHEITE

(30) Priority: 13.10.2000 SE 0003695
(43) Date of publication of application: 09.07.2003
(73) Proprietor: Trelleborg Forsheda Building AB, 331 29 Värnamo (SE)
(72) Inventor: CAVKA, Elvir, S-331 41 Värnamo (SE)
(74) Representative: Andersson, Per-Olof
(86) International application number: PCT/SE2001/002157
(87) International publication number: WO 2002/031395

(56) References cited:
- EP-A2- 0 967 426
- DE-A1- 2 854 662
- US-A- 4 371 179

## Description

### Field of the Invention

The present invention relates to a sealing ring for sealing an annular gap between an inner tube and an outer tube, which is axially slidable onto the inner tube, said sealing ring being adapted to be located in a circumferential groove in the inner tube, prior to the outer tube being slid on, and having a first sealing portion, which is adapted to abut against the bottom of the groove formed in the inner tube, a second sealing portion, which is adapted to abut against the outer tube, and two lateral sealing portions, which are adapted to abut against either side wall of the groove, wherein the lateral sealing portions consist of projecting, elastically flexible tongues, which are adapted to engage the side walls of the groove adjacent to the month of the groove. Such a sealing ring according to the preamble of claim 1 is known, for instance, from document DE-A-2854662.

### Background Art

A sealing ring of this kind is particularly intended for use in plastic tubes, for instance tubes of ethylene plastic. Prior-art sealing rings of this kind are often difficult to mount in the groove in the inner tube. It can also be difficult to slide the outer tube onto the inner tube provided with the sealing ring while maintaining the sealing ring in its correct position in the groove. When sliding on the tube, it can also be difficult to achieve the compression of the sealing ring required to obtain a satisfactory seal of the gap between the tubes.

One particular problem in connection with corrugated plastic tubes is the relaxation of the tube material, i.e. that the form of the material changes over time, which in prior-art sealing rings leads to a reduced sealing effect or even a complete loss of sealing effect. Another problem is that it can be difficult, when using prior-art sealing rings, to achieve a uniform stretching of the sealing ring as this is mounted in the groove in the inner tube, which may result in a reduced tightness in the more stretched parts of the sealing ring.

### Summary of the Invention

Therefore, the object of the invention is to provide a sealing ring which can be easily mounted in the groove in the inner tube while being uniformly stretched, allows the outer tube to be slid on in a relatively easy manner and yet provides a reliable seal and which has the ability to adjust to any changes in dimension of the groove and gap as a result of the relaxation or deformation of the tube material.

This object is achieved by means of a sealing ring of the kind according to the preamble of claim 1 and characterised in that the projecting, elastically flexible tongues extend obliquely axially-radially outward from the first sealing portion on both sides of the second sealing portion, that the axial distance between the free ends of the two tongues is larger than the width of the groove, and that a circumferential recess is formed between the second sealing portion and each lateral sealing portion to allow the second sealing portion and each lateral sealing portion to be moved towards each other in case of deformation of the sealing ring.

A sealing ring thus formed can be easily mounted in the groove in the inner tube while being uniformly stretched, and it is also easy to slide the outer tube onto the inner tube, since the circumferential recesses between the second sealing portion and the lateral sealing portions make it easy to compress the sealing ring in the groove. Notwithstanding this, the sealing ring will provide a reliable seal even if relaxation or deformation of the tube material should occur, inter alia owing to the fact that the pressure of the fluid transported in the conduit formed by the two tubes influences the second sealing portion and the lateral sealing portions, via the circumferential recesses, and forces them to abut sealingly against the inner surface of the outer tube and the side walls of the groove, respectively.

In a preferred embodiment, each of the recesses between the second sealing portion and the lateral sealing portions tapers towards its bottom.

The tongues' end portions, which are adapted to engage the side walls of the groove, preferably taper outwards.

In addition, a circumferential recess is suitably formed also between the first sealing portion and each lateral sealing portion to form a cavity between the sealing ring and the side walls of the groove when the sealing ring is located in the groove.

The first sealing portion is preferably smaller in width than the bottom of the groove.

The width of the second sealing portion preferably increases radially outwards.

The second sealing portion advantageously has a circumferential, radially projecting central portion.

The sealing ring is preferably symmetrical relative to a plane which is perpendicular to the centre axis of the sealing ring.

### Brief Description of the Drawings

The invention will now be described in more detail with reference to the accompanying drawings.

Fig. 1 is a sectional view of a sealing ring according to the invention in axial section along a diameter.

Fig. 2 is a sectional view of the sealing ring as mounted in an exterior, circumferential groove in an inner tube.

Fig. 3 is a sectional view of the sealing ring in a position where it seals an annular gap between the inner tube and an outer tube.

Fig. 4 shows a portion of Fig. 3 on an enlarged scale.

Fig. 5 corresponds to Fig. 4 but shows the sealing ring as exposed to an increased pressure at one side.

### Description of a Preferred Embodiment

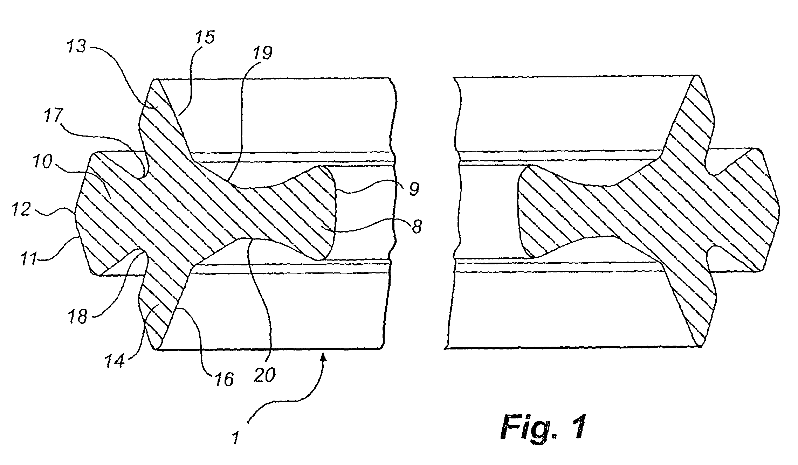

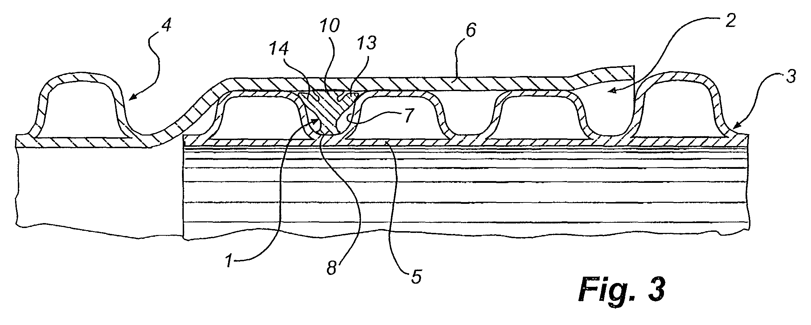

The sealing ring 1 shown in Fig. 1 is adapted to seal an annular gap 2 (see Fig. 3) between an inner tube 3 and an outer tube 4. In the example shown in the drawings, the sealing ring 1 is used to seal a gap 2 between a corrugated spigot end portion 5 of the inner tube 3 and a socket end portion 6 of the outer tube 4, said socket end portion 6 being slid onto the spigot end portion 5 in the way illustrated in Fig. 3. In this example, the tubes 3 and 4 are corrugated tubes of ethylene plastic. The corrugations of the inner tube 3 form circumferential, exterior grooves in the spigot end portion 5. The sealing ring 1 is to be arranged in the groove 7 closest to the free end of the spigot end portion 5.

The sealing ring 1 shown in Fig. 1 is made of rubber and has a radially inner first sealing portion 8, which is adapted to abut with an inner peripheral surface 9 against the bottom of the groove 7 formed in the spigot end portion 5 of the inner tube 3. The width of the first sealing portion 8 increases radially inwards.

The sealing ring 1 also has a radially outer second sealing portion 10, which is adapted to abut with an outer peripheral surface 11 against the inside of the socket end portion 6 of the outer tube 4. The outer peripheral surface 11 has a central, circumferential, projecting portion 12. The width of the second sealing portion 10 increases radially outwards.

The sealing ring 1 further has two lateral sealing portions 13 and 14, which consist of two projecting, elastically flexible tongues, which extend obliquely axially-radially outward from the first sealing portion 8 on both sides of the second sealing portion 10 and which are adapted to abut against either side wall of the groove 7. The tongues 13 and 14 are adapted to abut against the side walls of the groove 7 with a surface 15 and 16, respectively, facing radially inwards and being formed on the free end portion of the respective tongues. These end portions have an outwardly tapering shape. The axial distance between the free ends of the two tongues 13 and 14 is larger than the width of the groove 7.

Circumferential recesses 17 and 18, tapering towards their bottom, are formed between the second sealing portion 10 and the lateral sealing portions 13 and 14, respectively. Circumferential recesses 19 and 20 of a wide and shallow shape are formed between the first sealing portion 8 and the lateral sealing portions 13 and 14, respectively.

As shown in Fig. 1, the sealing ring 1 is symmetrical relative to a plane which is perpendicular to the centre axis of the sealing ring.

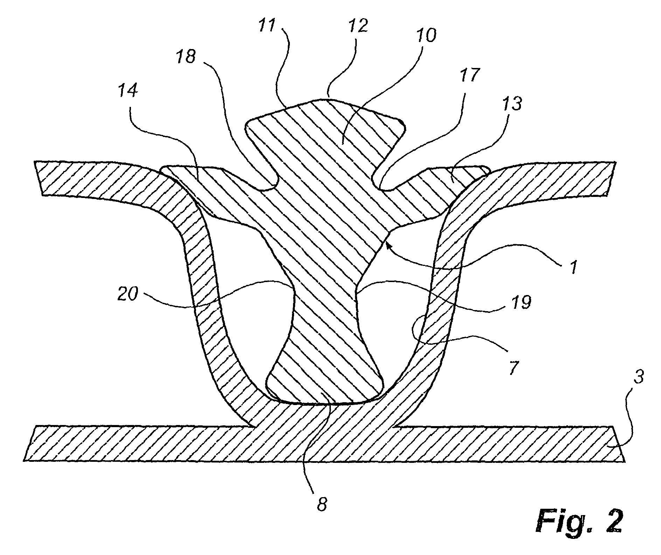

The sealing ring 1 is easy to mount in the groove 7 in the spigot end portion 5 of the inner tube 3 and will, owing to its design, be uniformly stretched in the groove. During mounting, the sealing ring's 1 lateral sealing portions or tongues 13 and 14 with their surfaces 15 and 16 first make contact with the side walls of the groove 7 adjacent to the mouth of the groove, and are then slightly bent radially outwards. This means that the recesses 17 and 18 will be slightly narrower when the sealing ring 1 is in its mounted position compared with its non-assembled position (see Fig. 2 and Fig. 1, respectively).

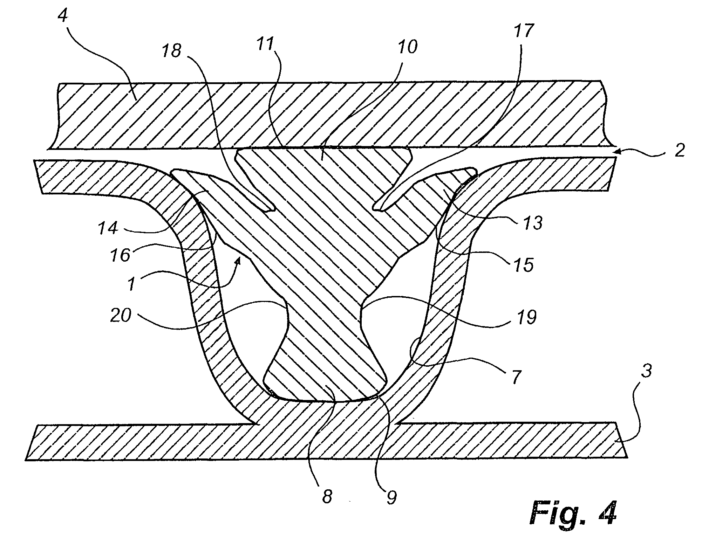

The socket end portion 6 of the outer tube 4 can be easily slid onto the spigot end portion 5 of the inner tube 3, since the sealing ring 1, owing to the recesses 17 and 18, is relatively easy to compress. When sliding on the outer tube 4, the sealing ring 1 is pressed radially inwards by the socket end portion 6, which causes the lateral sealing portions or tongues 13 and 14 to bend slightly more radially outwards (see Fig. 3 and Fig. 4), which means that, once the socket end portion 6 has been slid on, the recesses 17 and 18 will be narrower than they are when the sealing ring 1 is mounted in the groove 7 and the socket end portion 6 has not yet been slid on (Fig. 2).

As shown in Fig. 3 and Fig. 4, the first sealing portion 8 abuts with its surface 9 against the bottom of the groove 7, whereas the lateral sealing portions 13 and 14 with their surfaces 15 and 16 abut against the walls of the groove 7 adjacent to the mouth of the groove. The corrugations of the inner tube 3 have their weak sections in the region between the crests and valleys of the corrugations, i.e. as far as the groove 7 is concerned in the walls of the groove. As shown, the sealing ring 1 does not engage these weaker sections but only the stronger sections of the inner tube 3, i.e. the bottom of the groove 7 and the wall portions thereof located adjacent to the mouth of the groove. As further shown in Figs 3 and 4, the second sealing portion 10 abuts with its surface 11 and its compressed projection 12 against the inside of the socket end portion 6 of the outer tube 4 opposite the groove 7.

Because the lateral sealing portions or tongues 13 and 14 have been elastically bent in the direction of the second sealing portion 10 in the way described above during the mounting of the sealing ring 1 in the groove 7 and the sliding-on of the socket end portion 6 onto the spigot end portion 5, they will maintain their engagement with the walls of the groove 7 even if these would be slightly moved away from each other as a result of relaxation or deformation of the tube material. The fact that the pressure of the fluid transported in the conduit formed by the two tubes 3 and 4 may influence both the second sealing portion 10 and the lateral sealing portions 13 and 14, via the recesses 17 and 18, and force them to abut sealingly against the inner surface of the outer tube 4 and the side walls of the groove 7, respectively, contributes to ensuring a proper seal both before and after a possible relaxation.

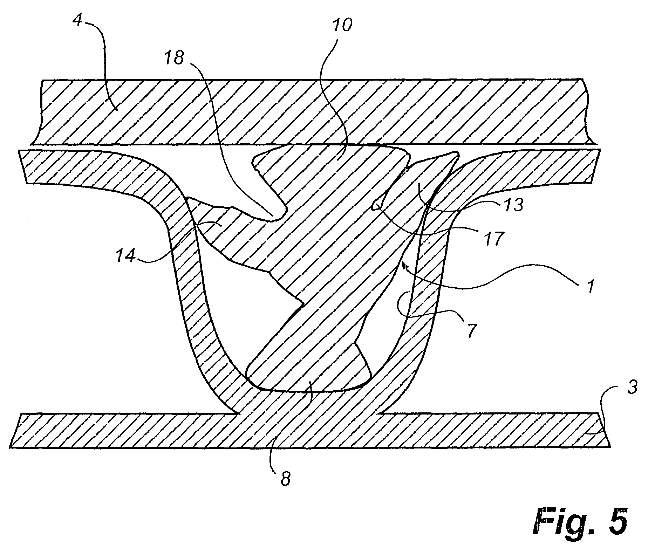

Fig. 5 illustrates the function of the sealing ring 1 when the pressure of the fluid acting on the sealing ring is higher at one side thereof. In Fig. 5, the sealing ring 1 is subjected to a higher pressure at its left side, which causes the second sealing portion 10 to be displaced to the right. However, this displacement does not result in a complete loss of sealing effect, since the second sealing portion 10 rests on the lateral sealing portion 13 and the lateral sealing portion 14 maintains its engagement with the side wall of the groove 7.

As is evident from the above description, the sealing ring according to the invention has a large number of advantages. It can be easily assembled in the groove while being uniformly stretched and it will maintain the seal of the gap even if a relaxation of the tubes should occur or the fluid pressure at one side of the sealing ring should be higher than at its other side.

The invention can be modified within the scope of the appended claims.

## Claims

1. A sealing ring for sealing an annular gap (2) between an inner tube (3) and an outer tube (4), which is axially slidable onto the inner tube, said sealing ring being adapted to be located in a circumferential groove (7) in the inner tube (3), prior to the outer tube (4) being slipped on, and having a first sealing portion (8), which is adapted to abut against the bottom of the groove (7) formed in the inner tube (3), a second sealing portion (10), which is adapted to abut against the outer tube (4), and two lateral sealing portions (13, 14), which are adapted to abut against either side wall of the groove (7), wherein the lateral sealing portions (13, 14) consist of projecting, elastically flexible tongue, which are adapted to engage the side walls of the groove adjacent to the mouth of the groove, **characterised in that** the tongues extend obliquely axially-radially outward from the first sealing portion (8) on both sides of the second sealing portion (10), that the axial distance between the free ends of the two tongues is larger than the width of the groove (7), and that a circumferential recess (17, 18) is formed between the second sealing portion (10) and each lateral sealing portion (13, 14) to allow the second sealing portion and each lateral sealing portion to be moved towards each other in case of deformation of the sealing ring.

2. A sealing ring according to claim 1, wherein each of the recesses (17, 18) between the second sealing portion (10) and the lateral sealing portions (13, 14) tapers towards its bottom.

3. A sealing ring according to claim 1 or 2, wherein the tongues' (13, 14) end portions, which are adapted to engage the side walls of the groove (7), taper outwards.

4. A sealing ring according to any one of the preceding claims, wherein a circumferential recess (19, 20) is formed between the first sealing portion (8) and each lateral sealing portion (13, 14) to form a cavity between the sealing ring and the side walls of the groove when the sealing ring is located in the groove (7).

5. A sealing ring according to any one of the preceding claims, wherein the first sealing portion (8) is smaller in width than the bottom of the groove (7).

6. A sealing ring according to any one of the preceding claims, wherein the width of the second sealing portion (10) increases radially outwards.

7. A sealing ring according to any one of the preceding claims, wherein the second sealing portion (10) has a circumferential, radially projecting central portion (12).

8. A sealing ring according to any one of the preceding claims, which is symmetrical relative to a plane which is perpendicular to the centre axis of the sealing ring.

## Patentansprüche

1. Dichtungsring zum Abdichten eines ringförmigen Zwischenraums (2) zwischen einer inneren Röhre (3) und einer äußeren Röhre (4), die axial auf die innere Röhre geschoben werden kann, wobei der Dichtungsring so eingerichtet ist, dass er in einer Umfangsnut (7) in der inneren Röhre (3) angeordnet werden kann, bevor die äußere Röhre (4) aufgesteckt wird, und er einen ersten Dichtungsabschnitt (8), der so eingerichtet ist, dass er an dem Boden der Nut (4) anliegt, die in der inneren Röhre (3) ausgebildet ist, einen zweiten Dichtungsabschnitt (10), der so eingerichtet ist, dass er an der äußeren Röhre (4) anliegt, sowie zwei seitliche Dichtungsabschnitte (13, 14) hat, die so eingerichtet sind, dass sie an beiden Seitenwänden der Nut (7) anliegen, wobei die seitlichen Dichtungsabschnitte (13, 14) aus vorstehenden elastisch flexiblen Zungen bestehen, die so eingerichtet sind, dass sie mit den Seitenwänden der Nut an die Öffnung der Nut angrenzend in Eingriff kommen, **dadurch gekennzeichnet, dass** sich die Zungen schräg axial radial von dem ersten Dichtungsabschnitt (8) auf beiden Seiten des zweiten Dichtungsabschnitts (10) nach außen erstrecken, dass der axiale Abstand zwischen den freien Enden der zwei Zungen größer ist als die Breite der Nut (7) und dass eine Umfangsaussparung (17, 18) zwischen dem zweiten Dichtungsabschnitt (10) und jedem seitlichen Dichtungsabschnitt (13, 14) ausgebildet ist, so dass der zweite Dichtungsabschnitt und jeder seitliche Dichtungsabschnitt bei Verformung des Dichtungsrings aufeinander zubewegt werden können.

2. Dichtungsring nach Anspruch 1, wobei sich jede der Aussparungen (17, 18) zwischen dem zweiten Dichtungsabschnitt (10) und den seitlichen Dichtungsabschnitten (13, 14) zu ihrem Boden hin verjüngt.

3. Dichtungsring nach Anspruch 1 oder 2, wobei sich die Endabschnitte der Zungen (13, 14), die so eingerichtet sind, dass sie mit den Seitenwänden der Nut (7) in Eingriff kommen, nach außen verjüngen.

4. Dichtungsring nach einem der vorangehenden Ansprüche, wobei eine Umfangsaussparung (19, 20) zwischen dem ersten Dichtungsabschnitt (8) und jedem seitlichen Dichtungsabschnitt (13, 14) ausgebildet ist, um einen Hohlraum zwischen dem Dichtungsring und den Seitenwänden der Nut auszubilden, wenn sich der Dichtungsring in der Nut (7) befindet.

5. Dichtungsring nach einem der vorangehenden Ansprüche, wobei der erste Dichtungsabschnitt (8) eine geringere Breite hat als der Boden der Nut (7).

6. Dichtungsring nach einem der vorangehenden Ansprüche, wobei die Breite des zweiten Dichtungsabschnitts (10) radial nach außen zunimmt.

7. Dichtungsring nach einem der vorangehenden Ansprüche, wobei der zweite Dichtungsabschnitt (10) einen radial vorstehenden Umfangs-Mittelabschnitt (12) hat.

8. Dichtungsring nach einem der vorangehenden Ansprüche, der in Bezug auf eine Ebene, die senkrecht zur Mittelachse des Dichtungsrings ist, symmetrisch ist.

## Revendications

1. Bague d'étanchéité destinée à fermer hermétiquement un espace annulaire (2) entre un tube intérieur (3) et un tube extérieur (4), qui peut coulisser de manière axiale sur le tube intérieur, ladite bague d'étanchéité étant adaptée pour être située dans une rainure circonférentielle (7) dans le tube intérieur (3), avant que le tube extérieur (4) ne glisse, et ayant une première partie d'étanchéité (8), qui est adaptée pour prendre appui sur le fond de la rainure (7) formée dans le tube intérieur (3), une seconde partie d'étanchéité (10), qui est adaptée pour prendre appui sur le tube extérieur (4), et deux parties d'étanchéité latérales (13, 14), qui sont adaptées pour prendre appui sur l'une des parois latérales de la rainure (7), dans laquelle les parties d'étanchéité latérales (13, 14) sont constituées de languettes de projection élastiquement flexibles, qui sont adaptées pour engager les parois latérales de la rainure de manière adjacente à l'ouverture de la rainure, **caractérisée en ce que** les languettes s'étendent de manière oblique, axiale et radiale vers l'extérieur depuis la première partie d'étanchéité (8) sur les deux côtés de la seconde partie d'étanchéité (10), **en ce que** la distance axiale entre les extrémités libres des deux languettes est supérieure à la largeur de la rainure (7) et **en ce qu'**un évidement circonférentiel (17, 18) est formé entre la seconde partie d'étanchéité (10) et chaque partie d'étanchéité latérale (13, 14) pour permettre à la seconde partie d'étanchéité et à chaque partie d'étanchéité latérale (13, 14) de se déplacer 'une vers l'autre en cas de déformation de la bague d'étanchéité.

2. Bague d'étanchéité selon la revendication 1, dans laquelle chacun des évidements (17, 18) entre la seconde partie d'étanchéité (10) et les parties d'étanchéité latérales (13, 14) diminue progressivement en direction de son fond.

3. Bague d'étanchéité selon la revendication 1 ou 2, dans laquelle les parties d'extrémité des languettes (13, 14), qui sont adaptées pour engager les parois latérales de la rainure (7), diminuent progressivement vers l'extérieur.

4. Bague d'étanchéité selon l'une quelconque des revendications précédentes, dans laquelle un évidement circonférentiel (19, 20) est formé entre la première partie d'étanchéité (8) et chaque partie d'étanchéité latérale (13, 14) pour former une cavité entre la bague d'étanchéité et les parois latérales de la rainure lorsque la bague d'étanchéité est située dans la rainure (7).

5. Bague d'étanchéité selon l'une quelconque des revendications précédentes, dans laquelle la première partie d'étanchéité (8) est inférieure en largeur au fond de la rainure (7).

6. Bague d'étanchéité selon l'une quelconque des revendications précédentes, dans laquelle la largeur de la seconde partie d'étanchéité (10) augmente radialement vers l'extérieur.

7. Bague d'étanchéité selon l'une quelconque des revendications précédentes, dans laquelle la seconde partie d'étanchéité (10) a une partie centrale circonférentielle (12) se projetant radialement.

8. Bague d'étanchéité selon l'une quelconque des revendications précédentes, qui est symétrique par rapport à un plan qui est perpendiculaire à l'axe central de la bague d'étanchéité.
